(19) Europäisches Patentamt / European Patent Office / Office européen des brevets

(11) **EP 3 720 889 B1**

(12) **FASCICULE DE BREVET EUROPEEN**

(45) Date de publication et mention de la délivrance du brevet:
**06.08.2025 Bulletin 2025/32**

(21) Numéro de dépôt: **18836836.9**

(22) Date de dépôt: **04.12.2018**

(51) Classification Internationale des Brevets (IPC):
*C08F 36/06* (2006.01)      *C08F 136/06* (2006.01)
*C08F 2/06* (2006.01)      *C08F 4/54* (2006.01)

(52) Classification Coopérative des Brevets (CPC):
(C-Sets disponibles)
**C08F 136/06; C08F 36/06**      (Cont.)

(86) Numéro de dépôt international:
**PCT/FR2018/053100**

(87) Numéro de publication internationale:
**WO 2019/110915 (13.06.2019 Gazette 2019/24)**

(54) **PROCEDE CONTINU DE PREPARATION D'UN ELASTOMERE DIENIQUE**

KONTINUIERLICHES VERFAHREN ZUR HERSTELLUNG EINES DIENELASTOMERS

CONTINUOUS METHOD FOR PRODUCING A DIENE ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2017 FR 1761660**

(43) Date de publication de la demande:
**14.10.2020 Bulletin 2020/42**

(73) Titulaire: **Compagnie Générale des Etablissements Michelin**
**63000 Clermont-Ferrand (FR)**

(72) Inventeurs:
• **KIENER, Pierre**
**63040 Clermont-ferrand Cedex 9 (FR)**
• **PEHLIVAN, Leyla**
**63040 Clermont-ferrand Cedex 9 (FR)**

• **RASIGADE, Jean-Philippe**
**63040 Clermont-ferrand Cedex 9 (FR)**
• **SAID-DIATTA, Rokhiyatou**
**63040 Clermont-ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**RU-C1- 2 028 308      RU-C1- 2 028 308**
**RU-C2- 2 263 121      US-B1- 6 372 863**
**US-B1- 6 372 863**

• **DATABASE WPI Week 201427, Derwent World Patents Index; AN 2014-A23570, XP002783924**
• **DATABASE WPI Week 201427, Derwent World Patents Index; AN 2014-A23570, XP002783924**

**(Cont. page suivante)**

(52) Classification Coopérative des Brevets (CPC):
(Cont.)

C-Sets
**C08F 36/06, C08F 2/001;**
**C08F 36/06, C08F 2/06;**
**C08F 136/06, C08F 4/545**

**Description**

**DOMAINE DE L'INVENTION**

La présente invention concerne un procédé en continu de préparation d'un élastomère diénique, tel qu'un homopolymère ou un copolymère du butadiène. L'invention s'applique notamment à l'obtention d'un polybutadiène à taux élevé d'enchaînements cis-1,4 présentant à la fois une viscosité Mooney égale ou supérieure à 35 et un indice de polydispersité réduit.

La polymérisation est conduite en solution. Lors d'une polymérisation en solution, le milieu réactionnel comprend un solvant ou un diluant. Le réacteur peut alors être rempli de la solution de polymérisation (et ainsi dépourvu d'une phase gaz) ou comprendre une phase liquide et une phase gaz. Dans la présente invention, les réactions de polymérisation sont conduites en solution dans des réacteurs pleins, c'est-à-dire sensiblement dépourvus d'une phase gazeuse.

**ETAT DE LA TECHNIQUE**

Pour la préparation d'homopolymères ou de copolymères du butadiène présentant un taux élevé d'enchaînements cis-1,4, il est connu d'utiliser des systèmes catalytiques à base :

- d'un sel de terre(s) rare en solution dans un solvant hydrocarboné,
- d'un agent d'alkylation de ce sel constitué d'un alkylaluminium, et
- d'un halogénure d'un alkylaluminium.

Les documents de brevet WO-A-02/38636 et WO-A-03/097708 au nom des Demanderesses enseignent, pour l'obtention de polybutadiènes, d'utiliser un système catalytique de type préformé à base d'au moins :

- un diène conjugué de préformation,
- un sel d'un ou de plusieurs métaux de terre(s) rare(s) d'un acide phosphorique organique, dans au moins un solvant hydrocarboné inerte, saturé et de type aliphatique ou alicyclique,
- un agent d'alkylation constitué d'un alkylaluminium de formule AIR3 ou HAIR2, et
- un donneur d'halogène qui appartient à la famille des halogénures d'alkylaluminium à l'exclusion des sesquihalogénures d'alkylaluminium.

Les polybutadiènes obtenus au moyen de ce système catalytique présentent notamment un indice de polydispersité inférieur à 2,5 et une viscosité Mooney ML(1+4) à 100°C égale ou supérieure à 40. Ces caractéristiques combinées rendent ces polybutadiènes bien adaptés pour être utilisés dans des bandes de roulement d'enveloppe de pneumatique.

Un procédé de synthèse en continu de polybutadiène est par ailleurs également décrit dans la demande de brevet EP 1 845 118, au nom des Demanderesses. Les documents de brevets US6372863 B1, CN103360525 A, RU2028308 C1 et RU2263121 C2 sont d'autres exemples illustrant des procédés continus de préparation d'élastomères diéniques.

Le document de brevet WO-A-2010/139449 au nom des Demanderesses décrit un autre système catalytique pour la polymérisation de diènes conjugués à base d'un sel métallique de terre rare et d'un composé organométallique à base d'un métal appartenant à la 2$^{ème}$ ou à la 13$^{ème}$ colonne de la classification périodique.

Lors de la synthèse en continu de polymères de diènes conjugués dans des réacteurs pleins, la maitrise de la température dans le procédé de polymérisation à un ou plusieurs réacteurs en série est déterminante. Pour un procédé donné, le domaine des conditions opératoires (débits spécifiques et concentration en monomère(s)) est conditionné par le choix des températures de polymérisation.

Ainsi pour des réacteurs pleins exempts de tout système de refroidissement, la quantité de chaleur dégagée par la production de polymère ne peut excéder la quantité de chaleur absorbée par le milieu réactionnel lorsqu'il s'échauffe de sa température initiale à la température de polymérisation. Or cette dernière ne peut être augmentée sans altérer les propriétés du milieu réactionnel et/ou du catalyseur.

Cette limitation doit donc être repoussée par l'utilisation d'un système de refroidissement au sein du réacteur, tel qu'une double enveloppe ou des faisceaux internes de refroidissement.

Le problème résultant de la présence d'une double enveloppe ou de faisceaux de refroidissement est que ce matériel a aussi des limites dans sa capacité de refroidissement qui dépend directement de la surface d'échange ou de la température du fluide caloporteur et des propriétés du fluide polymérique au sein du réacteur. La concentration en monomère et la conversion sont donc aussi limitées.

Pour dépasser ces limitations, les demanderesses ont découvert qu'il était intéressant de ne pas injecter la totalité du monomère dès le premier réacteur mais d'en injecter une partie directement dans un réacteur subséquent. Cette injection permet d'apporter une capacité de refroidissement supplémentaire et significative à l'ensemble des réacteurs tout en améliorant l'efficacité de conversion de chacun des réacteurs.

Le procédé selon l'invention permet dans ces conditions de fonctionner avec une concentration massique de monomère diène conjugué à polymériser plus élevée.

## EXPOSE DE L'INVENTION

L'invention a pour objet un procédé continu de préparation d'un élastomère diénique, comprenant une réaction de polymérisation d'un système catalytique avec au moins un monomère diène conjugué à polymériser en solution dans un solvant, le système catalytique est à base d'au moins :

- Un sel organique de terre rare ;
- Un agent d'alkylation ; et, le cas échéant
- Un donneur d'halogène et/ou un monomère diène conjugué de préformation

dans au moins deux réacteurs de polymérisation pleins en série, caractérisé en ce qu'une partie du monomère diène conjugué à polymériser est introduit dans un réacteur de polymérisation subséquent au premier réacteur de polymérisation, et en ce qu' une partie du solvant est également introduite avec le monomère diène conjugué à polymériser dans le réacteur de polymérisation subséquent.

Avantageusement, au moins 20% en poids, par rapport au poids total, du monomère diène conjugué à polymériser est introduit dans un réacteur de polymérisation subséquent.

La partie du monomère diène conjugué à polymériser introduite dans un réacteur de polymérisation subséquent est avantageusement à une température comprise entre -10°C et 35°C, avantageusement entre 0°C et 20°C.

En particulier, le procédé continu comprend les étapes simultanées suivantes :

a) introduction dans un premier réacteur de polymérisation du solvant, de la totalité du système catalytique, d'une partie du monomère diène conjugué à polymériser ;
b) polymérisation dudit monomère diène dans ledit premier réacteur de polymérisation ;
c) introduction dans un deuxième réacteur de polymérisation de la solution issue de l'étape b) et de la partie restante du monomère diène conjugué à polymériser avec une partie du solvant
d) polymérisation dudit monomère diène dans ledit deuxième réacteur de polymérisation ;
e) le cas échéant, introduction dans un troisième réacteur de polymérisation de la solution issue de l'étape d) ;
f) le cas échéant, polymérisation dudit monomère diène dans ledit troisième réacteur de polymérisation.

La polymérisation à l'étape b) est avantageusement conduite à une température supérieure ou égale à 50°C.
La polymérisation à l'étape d) est avantageusement conduite à une température supérieure ou égale à 50°C.
La polymérisation à l'étape f) est avantageusement conduite à une température supérieure ou égale à 50°C.
Le monomère diène conjugué à polymériser et le solvant sont avantageusement introduits, dans le premier et/ou le réacteur subséquent de polymérisation, à une température comprise entre -10°C et 35°C, avantageusement entre 0°C et 20°C.

En particulier, le procédé continu comprend les étapes simultanées suivantes :

a1) séparation du flux d'entrée F comprenant le solvant et la totalité du monomère diène conjugué à polymériser en deux flux F1 et F2 ;
a2) introduction dans un premier réacteur de polymérisation du flux F1, du système catalytique ;
b) polymérisation en continu dudit monomère diène dans ledit premier réacteur de polymérisation ;
c) injection dans un deuxième réacteur de la solution issue de l'étape b) et du flux F2 ;
d) polymérisation en continu dudit monomère diène dans ledit deuxième réacteur de polymérisation ;
e) le cas échéant, injection dans un troisième réacteur de la solution issue de l'étape d) ;
f) le cas échéant, polymérisation en continu dudit monomère diène dans ledit troisième réacteur de polymérisation.

Avantageusement, au moins le flux F2 est à une température comprise entre - 10°C et 35°C, avantageusement entre 0°C et 20°C.
La concentration massique en monomère diène conjugué à polymériser est avantageusement supérieure à 20%, par rapport au poids total de monomère diène conjugué à polymériser + solvant.
Le monomère diène à polymériser est avantageusement le butadiène.

**DESCRIPTION DES FIGURES**

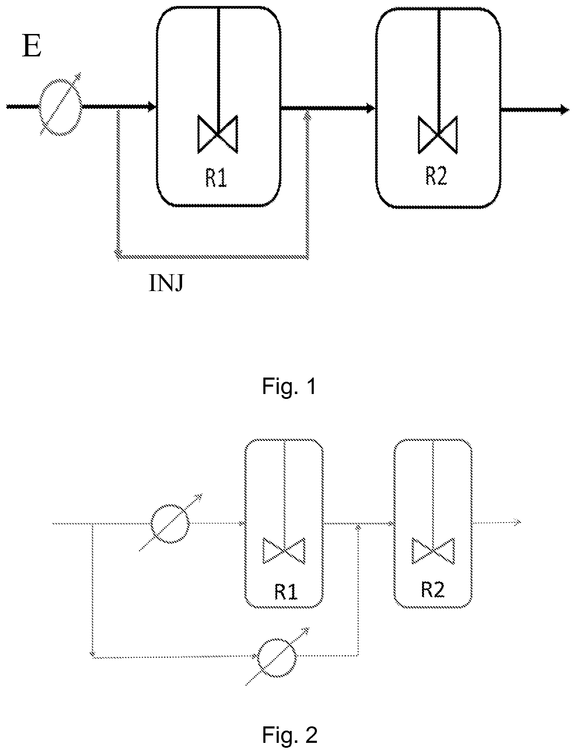

Les figures 1, 2 et 3 représentent deux réacteurs de polymérisation en série. Le premier réacteur de polymérisation est noté R1. Le deuxième réacteur de polymérisation est noté R2.

Dans le mode de réalisation particulier représenté sur la figure 1, le flux d'entrée comprenant le solvant et le monomère diène conjugué à polymériser est séparé en deux flux :

- l'un alimentant le réacteur de polymérisation R1 ;
- l'autre alimentant le réacteur de polymérisation R2 (INJ = injection).

Dans ce mode de réalisation, un échangeur E est monté en amont du réacteur de polymérisation R1. Il est possible, au niveau de cet échangeur, d'abaisser la température du flux comprenant le solvant et le monomère diène conjugué à polymériser.

Dans le mode de réalisation particulier représenté sur la figure 2, le flux d'entrée comprenant le solvant et le monomère diène conjugué à polymériser est séparé en deux flux. Dans ce mode de réalisation, un échangeur est monté en amont du réacteur de polymérisation R1, permettant d'abaisser la température du flux comprenant le solvant et le monomère diène conjugué à polymériser entrant dans R1. Un échangeur est également monté en amont du réacteur de polymérisation R2, permettant d'abaisser la température du flux comprenant le solvant et le monomère diène conjugué à polymériser entrant dans R2.

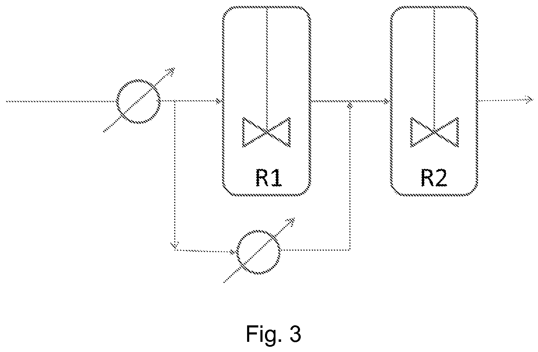

Dans le mode de réalisation particulier représenté sur la figure 3, le flux d'entrée comprenant le solvant et le monomère diène conjugué à polymériser est refroidi (échangeur) puis séparé en deux flux. La température du flux alimentant le réacteur de polymérisation R2 est également contrôlée, et éventuellement abaissée.

Les flux d'alimentation en système catalytique ainsi que les éventuels systèmes de refroidissement des réacteurs de polymérisation ne sont pas représentés sur la figure 1, 2 ou 3.

**DESCRIPTION DÉTAILLÉE DE L'INVENTION**

La présente invention a pour objet un procédé continu de préparation d'un élastomère diénique, comprenant une réaction de polymérisation d'un système catalytique avec au moins un monomère diène conjugué à polymériser en solution dans un solvant, le système catalytique est à base d'au moins :

- Un sel organique de terre rare ;
- Un agent d'alkylation ; et, le cas échéant
- Un donneur d'halogène et/ou un monomère diène conjugué de préformation

dans au moins deux réacteurs de polymérisation pleins en série, caractérisé en ce qu'une partie du monomère diène conjugué à polymériser est introduit dans un réacteur de polymérisation subséquent au premier réacteur de polymérisation, et en ce qu'une partie du solvant est introduite avec le monomère diène conjugué à polymériser dans le réacteur de polymérisation subséquent.

Au sens de la présente invention, on entend par « réacteur de polymérisation » un réacteur comprenant du monomère diène conjugué à polymériser, du solvant, le système catalytique et de l'élastomère diénique en cours de formation. Ces composants constituent le milieu réactionnel. Dans le cadre de l'invention, ce réacteur de polymérisation est plein, c'est-à-dire qu'il est rempli du milieu réactionnel, et ainsi sensiblement dépourvu d'une phase gazeuse.

Au sens de la présente invention, on entend par « premier réacteur de polymérisation » le réacteur dans lequel sont injectés du monomère, du solvant et le système catalytique permettant d'initier la réaction de polymérisation. Dans ce premier réacteur de polymérisation, on n'injecte pas de solution ou de flux comprenant de l'élastomère diénique provenant d'un réacteur de polymérisation amont. En effet, la réaction de polymérisation débute dans ce premier réacteur.

Au sens de la présente invention, on entend par « réacteur de polymérisation subséquent » ou « réacteur de polymérisation aval » un réacteur de polymérisation alimenté par le flux sortant du réacteur de polymérisation qui le précède. Un tel flux comprend outre le monomère diène conjugué à polymériser, de l'élastomère diénique. Un tel réacteur de polymérisation subséquent ou aval est positionné après un autre réacteur de polymérisation, c'est-à-dire en aval de cet autre réacteur de polymérisation.

Au sens de la présente invention, on entend par « température du réacteur de polymérisation » la température au sein du réacteur.

Au sens de la présente invention, on entend par « faisceau de refroidissement » un ou plusieurs éléments, le plus souvent tubulaires, traversant le réacteur de polymérisation, dans lesquels s'écoule un fluide de refroidissement ou un fluide caloporteur.

Au sens de la présente invention, on entend par « concentration massique en monomère diène conjugué à polymériser » la somme des concentrations en monomères introduits dans l'ensemble des réacteurs.

Au sens de la présente invention, l'expression « le monomère », « du monomère » désigne soit un unique monomère pour former un homopolymère soit des monomères qui vont copolymériser ensemble pour former un copolymère.

L'invention se caractérise donc en ce que le monomère diène conjugué à polymériser est introduit dans au moins deux réacteurs de polymérisations en série : un premier réacteur de polymérisation et au moins un réacteur de polymérisation subséquent. Ainsi, une partie du monomère diène conjugué à polymériser est introduite dans un réacteur comprenant dudit élastomère diénique en solution.

La température du réacteur de polymérisation est avantageusement supérieure ou égale à 50°C, plus avantageusement supérieure ou égale à 70°C, encore plus avantageusement supérieure ou égale à 80°C. La température du réacteur de polymérisation est avantageusement inférieure à 115°C.

La température du réacteur de polymérisation aval peut avantageusement être supérieure à celle du réacteur de polymérisation amont.

Les réacteurs de polymérisation sont avantageusement équipés de moyens d'agitation, tels que des hélices ou des pales adaptées au milieu de polymérisation.

Les réacteurs de polymérisation sont avantageusement équipés de moyens de refroidissement, tels que des doubles enveloppes et/ou des faisceaux de refroidissement.

Une partie du solvant est introduite avec le monomère diène conjugué à polymériser dans le réacteur de polymérisation subséquent.

Selon l'invention, avantageusement au moins 20% en poids, plus avantageusement au moins 30% en poids, par exemple de 30% à 60% en poids, par rapport au poids total, du monomère diène conjugué à polymériser est introduit dans un réacteur de polymérisation subséquent.

Dans un mode de réalisation avantageux, le monomère diène conjugué à polymériser et le solvant sont introduits, dans le premier et/ou le réacteur subséquent de polymérisation, à une température comprise entre -10°C et 35°C, avantageusement entre 0°C et 20°C. En effet, on a en outre constaté que lorsque la température des flux de monomère diène conjugué à polymériser et de solvant est abaissée avant introduction de ces flux dans le réacteur de polymérisation, on pouvait encore augmenter la concentration massique maximale en monomère diène conjugué à polymériser.

Dans un mode de réalisation préféré, la totalité du système catalytique est introduite dans le premier réacteur de polymérisation.

Le procédé continu comprend avantageusement les étapes simultanées suivantes :

a) introduction dans un premier réacteur de polymérisation du solvant, de la totalité du système catalytique, d'une partie du monomère diène conjugué à polymériser ;
b) polymérisation dudit monomère diène dans ledit premier réacteur de polymérisation ;
c) introduction dans un deuxième réacteur de polymérisation de la solution issue de l'étape b) et de la partie restante du monomère diène conjugué à polymériser avec une partie du solvant
d) polymérisation dudit monomère diène dans ledit deuxième réacteur de polymérisation ;
e) le cas échéant, introduction dans un troisième réacteur de polymérisation de la solution issue de l'étape d) ;
f) le cas échéant, polymérisation dudit monomère diène dans ledit troisième réacteur de polymérisation.

La polymérisation peut être une homopolymérisation ou une copolymérisation en fonction du monomère qui peut être un unique monomère ou un mélange de monomères, avantageusement un unique monomère. Dans le cas d'une copolymérisation, les différents monomères sont tous introduits dans les différents réacteurs selon le procédé objet de la présente invention, c'est-à-dire que pour chaque monomère, une partie de ce monomère est introduite dans un réacteur de polymérisation subséquent au premier réacteur de polymérisation.

La polymérisation à l'étape b) est avantageusement conduite à une température supérieure ou égale à 50°C, plus avantageusement supérieure ou égale à 70°C.

La polymérisation à l'étape d) est avantageusement conduite à une température supérieure ou égale à 50°C, plus avantageusement supérieure ou égale à 70°C.

La polymérisation à l'étape f) est avantageusement conduite à une température supérieure ou égale à 50°C, plus avantageusement supérieure ou égale à 70°C.

Le troisième réacteur de polymérisation permet d'augmenter le taux de conversion et ainsi d'atteindre des taux de conversion particulièrement élevés, typiquement supérieurs à 90%, avantageusement supérieurs à 95%, encore plus avantageusement supérieurs à 98%.

Le procédé continu selon l'invention comprend avantageusement les étapes simultanées suivantes :

a1) séparation du flux d'entrée F comprenant le solvant et la totalité du monomère diène conjugué à polymériser en deux flux F1 et F2 ;

a2) introduction dans un premier réacteur de polymérisation du flux F1, du système catalytique ;

b) polymérisation en continu dudit monomère diène dans ledit premier réacteur de polymérisation ;

c) injection dans un deuxième réacteur de la solution issue de l'étape b) et du flux F2 ;

d) polymérisation en continu dudit monomère diène dans ledit deuxième réacteur de polymérisation ;

e) le cas échéant, injection dans un troisième réacteur de la solution issue de l'étape d) ;

f) le cas échéant, polymérisation en continu dudit monomère diène dans ledit troisième réacteur de polymérisation.

Avantageusement, la température du flux d'entrée comprenant le solvant et le monomère diène conjugué à polymériser est ajustée à une température comprise entre - 10°C et 35°C et particulièrement entre 0°C et 20°C.

Cet ajustement de la température peut être réalisé :

- directement sur le flux F, de sorte que les flux F1 et F2 introduits aux étapes a2) et c) soient à une température comprise entre -10°C et 35°C, avantageusement entre 0°C et 20°C ;
- sur le flux F1 et/ou sur le flux F2.

Avantageusement au moins le flux F2 est à une température comprise entre - 10°C et 35°C, avantageusement entre 0°C et 20°C.

Le procédé selon l'invention permet d'augmenter la concentration massique en monomère diène conjugué à polymériser. Selon l'invention, la concentration massique en monomère diène conjugué à polymériser est avantageusement supérieure à 10%, plus avantageusement supérieure à 14%, encore plus avantageusement supérieure à 20%, en poids par rapport au poids total monomère diène conjugué à polymériser + solvant.

En permettant un fonctionnement à concentration massique en monomère diène conjugué à polymériser plus élevée, le procédé selon l'invention permet d'abaisser le coût opératoire du procédé en évitant l'évaporation de solvant. Ainsi, un procédé à une concentration massique en monomère diène conjugué à polymériser de 17% nécessite d'évaporer 4,9 tonnes de solvant, alors qu'un procédé dont le ratio massique [monomère diène conjugué à polymériser] / [solvant] est de 25% ne requiert d'extraire que 3 tonnes de solvant. L'économie de 1,9 tonne de solvant par tonne d'élastomère diénique est substantielle.

En sortie du dernier réacteur, le taux de conversion de l'élastomère diénique est avantageusement supérieur à 90%, plus avantageusement supérieur à 95%, encore plus avantageusement supérieur à 98%.

Les demanderesses ont aussi découvert de manière inattendue que les propriétés de l'élastomère diénique fabriqué sont inchangées dans ces différentes conditions. En particulier, on peut obtenir des polybutadiènes ayant un indice de polydispersité inférieur à 2,5 et une viscosité Mooney ML(1+4) à 100°C égale ou supérieure à 40.

Monomère diène à polymériser

Selon le procédé de l'invention, on polymérise au moins un monomère diène conjugué.

Par monomère diène conjugué, on entend un monomère diène conjugué ayant de 4 à 16 atomes de carbone. A titre de diènes conjugués conviennent notamment le butadiène-1,3, le 2-méthyl-1,3-butadiène (encore appelé isoprène), les 2,3-di(alkyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, le myrcène, et leurs mélanges.

Avantageusement, le monomère diène à polymériser est choisi parmi le butadiène, l'isoprène ou leurs mélanges, plus avantageusement le monomère diène à polymériser est le butadiène. Selon des mises en oeuvre du procédé de l'invention, le monomère diène conjugué peut être copolymérisé avec un ou plusieurs monomères diènes conjugués.

Système catalytique

Le système catalytique est préparé à base d'au moins :

- un sel organique de terre rare,
- un agent d'alkylation

et, le cas échéant,

- un donneur d'halogène et/ou
- un monomère diène conjugué de préformation.

Par l'expression « à base de » utilisée pour définir les constituants du système catalytique, on entend le produit ou les produits de réaction de ces constituants après prémélangeage de tout ou partie des constituants, ou, le cas échéant, après préformation et/ou vieillissement du système catalytique ou encore le produit ou les produits de la réaction *in situ* de ces constituants.

Le système catalytique peut être préparé en discontinu ou en continu. Selon une mise en oeuvre du procédé de l'invention, en amont du réacteur de polymérisation, une installation de synthèse en continu du système catalytique alimente en continu le premier réacteur de polymérisation. Le système catalytique peut être introduit directement dans le réacteur ou être mélangé préalablement à l'un au moins des autres composants qui alimentent le premier réacteur de polymérisation.

Selon l'invention, on entend par "terre rare" un métal choisi parmi l'yttrium, le scandium et les lanthanides, métaux ayant un numéro atomique allant de 57 à 71 inclus dans le tableau périodique des éléments de Mendeleïev. De préférence le métal de terre rare est choisi parmi les lanthanides, le néodyme étant plus particulièrement préféré.

Par sel organique d'un métal de terre rare on entend par exemple les tris(carboxylates), tris(alcoolates), tris(acétylacétonates) ou tris(organophosphates) de terre rare.

Lorsque le sel organique de terre rare est un tris(carboxylate) de terre rare, le carboxylate peut être choisi parmi les esters d'acides carboxyliques aliphatiques, linéaires ou ramifiés, ayant 6 à 16 atomes de carbone dans la chaîne linéaire, et les esters d'acides carboxyliques aromatiques comportant entre 6 et 12 atomes de carbone, substitués ou non. A titre d'exemple on peut citer le néodécanoate (versatate), l'octoate, l'hexanoate, linéaires ou ramifiés, ou encore le naphthénate, substitué ou non. Parmi ceux-ci, le 2-éthylhexanoate, le naphténate ou le néodécanoate (versatate) de terre rare est particulièrement préféré.

Lorsque le sel organique de terre rare est un tris(alcoolate) de terre rare, l'alcoolate peut être choisi parmi les alcoolates d'un alcool ou d'un polyol dérivé d'un hydrocarbure aliphatique ou cyclique et notamment d'un hydrocarbure aliphatique, linéaire ou ramifié, ayant 1 à 10 atomes de carbone dans la chaîne linéaire, plus particulièrement 4 à 8 atomes de carbone. On peut mentionner par exemple le néo-pentanolate.

Lorsque le sel organique de terre rare est un tris(organophosphate) de terre rare, l'organophosphate peut être choisi les diesters d'acide phosphorique de formule générale (R'O)(R"O)PO(OH), dans laquelle R' et R", identiques ou différents, représentent un radical alkyle, aryle ou alkylaryle. A titre d'exemple on peut citer utiliser le tris [dibutyl phosphate] de néodyme, le tris [dipentyl phosphate] de néodyme, le tris [dioctyl phosphate] de néodyme, le tris [bis (2 éthylhexyl) phosphate] de néodyme, le tris [bis (1 méthylheptyl) phosphate] de néodyme, le tris [bis (p nonylphenyl) phosphate] de néodyme, le tris [butyl (2 éthylhexyl) phosphate] de néodyme, le tris [(1 méthylheptyl) (2 éthylhexyl) phosphate] de néodyme, le tris [(2 éthylhexyl) (p nonylphényl) phosphate] de néodyme, le tris [bis (2 éthylhexyl) phosphate] de néodyme, le tris[bis(oléyllyl) phosphate] ou le tris[bis(linéolyl) phosphate].

Parmi les organophosphates de terre rare, le sel est plus préférentiellement encore le bis(2-éthylhexyl)phosphate de terre rare.

Le sel organique de terre rare est préférentiellement choisi parmi le tris[bis(2-éthylhexyl)phosphate] de néodyme et le tris(versatate) de néodyme.

Le sel de terre rare est mis en solution ou en suspension selon les cas de manière classique dans un solvant hydrocarboné inerte choisi par exemple parmi les solvants aliphatiques ou alicycliques de bas poids moléculaire tel que le cyclohexane, le méthylcyclohexane, une coupe d'hexanes, le n-heptane, ou un mélange de ces solvants.

À titre d'agent d'alkylation utilisable dans le système catalytique selon l'invention, on peut citer des alkylaluminiums choisi parmi des trialkylaluminiums, ou des hydrures de dialkylaluminium, le groupement alkyl comportant de 1 à 10 atomes de carbone. À titre de tri(alkylaluminium), on peut citer le triéthylaluminium, le tri-isopropylaluminium, le triisobutylaluminium, le tributylaluminium ou le trioctylaluminium. Parmi les alkylaluminiums on préfère le triisobutylaluminium ou l'hydrure de diisobutylaluminium.

À titre d'agent d'alkylation utilisable dans le système catalytique selon l'invention, on peut également citer les aluminoxanes, composés issus de l'hydrolyse partielle d'un ou de plusieurs trialkylaminium, tels que le méthylaluminoxane, le triisobutylaluminoxane ou encore les méthylaluminoxanes.

Lorsque le système catalytique comprend un donneur d'halogène, on peut utiliser un halogénure d'alkyle, un halogénure d'alkylaluminium ou un sesquihalogénure d'alkylaluminium. On utilise préférentiellement un halogénure d'alkylaluminium, le groupement alkyl comportant de 1 à 8 atomes de carbone. Parmi ceux-ci, on préfère le chlorure de diéthylaluminium.

Selon un mode de réalisation, pour la constitution du système catalytique on utilise en combinaison l'hydrure de diisobutylaluminium et le chlorure de diéthylaluminium à titre d'agent d'alkylation et de donneur d'halogène, respectivement.

Selon une caractéristique particulière du système catalytique, le ou les métaux de terre rare sont présents dans le système catalytique selon une concentration égale ou supérieure à 0,002 mol/l et, de préférence, allant de 0,002 à 0,1 mol/l et plus particulièrement allant de 0,010 mol/l à 0,08 mol/l, voire allant de 0,02 à 0,07 mol/l.

Selon une autre caractéristique particulière du système catalytique, le rapport molaire (agent d'alkylation / sel de terre(s) rare(s)) dans ledit système catalytique présente une valeur d'au moins 1/1 et d'au plus 20/1, et, encore plus avantageusement, d'au plus 5/1.

Selon encore une autre caractéristique particulière du système catalytique, le rapport molaire (donneur d'halogène / sel de terre rare) peut présenter une valeur d'au moins 2/1, de préférence d'au moins 2,6/1, et d'au plus 3,5/1, de préférence d'au plus 3/1.

Lorsque le système catalytique comprend un monomère diène conjugué de préformation utilisé pour « préformer » ledit système catalytique, celui-ci peut être choisi parmi les monomères diènes conjugués cités précédemment. Le 1,3-butadiène ou l'isoprène sont particulièrement préférés.

On notera que le rapport molaire (monomère de préformation / sel de terre(s) rare(s)) peut présenter une valeur allant de 10/1 à 70/1, de préférence 25/1 à 50/1.

À titre de système catalytique préformé ou non, on peut utiliser dans le cadre de la présente invention ceux décrits dans les documents WO-A-02/38636, WO-A-03/097708 et WO-A-2007045417 au nom des Demanderesses.

Selon des variantes d'exécution du procédé de polymérisation catalytique conforme à l'invention, on peut introduire dans le réacteur de polymérisation, par un flux indépendant de l'introduction du système catalytique utilisé pour la réaction de polymérisation, une quantité supplémentaire prédéterminée d'au moins un composé alkylaluminium de formules $AlR_3$ ou $HAlR_2$ ou $R"_nAlR'_{3-n}$, dans lesquelles R et R' représentent un groupe alkyle de 1 à 20 atomes de carbone, saturé ou non, préférentiellement de 1 à 12 atomes de carbone, R" représente un groupe allylique, n un entier inclusivement de 1 à 3. De telles variantes sont décrites notamment dans les documents WO2006133757, EP 1845118, WO 10/069511, WO10/069805.

Solvant

Le solvant de polymérisation est avantageusement un solvant hydrocarboné inerte, de préférence aliphatique ou alicyclique de faible masse moléculaire. On peut citer à titre d'exemple les paraffines, telles que le n-pentane, l'isopentane, le 2,2-diméthylbutane, le 2,2 dimethyl-propane (neopentane), une coupe de pentanes, le n-hexane, une coupe d'hexanes, le n-heptane, une coupe d'heptanes, le n-octane, l'iso-octane, une coupe d'octanes, les oléfines telles que le 1-pentène, les isoamylènes (2-methyl-2-butène, 2-methyl-1-butène et 3-methyl-1-butène), les cyclo-paraffines telles que le cyclopentane, le cyclohexane, le méthylcyclopentane et le méthylcyclohexane, ainsi que les mélanges de ces composés. On peut également citer à titre de solvant, les hydrocarbures aromatiques comme par exemple le benzène ou le toluène. Le solvant peut être introduit directement dans le réacteur. Il peut également être mélangé préalablement à au moins un autre des composants introduits dans le réacteur de polymérisation, notamment au(x) monomère(s) à polymériser. Cette dernière option constitue une mise en œuvre préférentielle selon l'invention.

Élastomère diénique

Les élastomères obtenus selon le procédé de l'invention sont avantageusement stéréospécifiques et possèdent avantageusement une teneur en liaisons cis-1,4 égale ou supérieure à 94 %. Ces élastomères présentent avantageusement un indice de polydispersité Ip qui est inférieur à 3,2 et, plus avantageusement, égal ou inférieur à 2,5.

On notera en outre que les élastomères obtenus grâce au procédé selon l'invention présentent un fluage ou écoulement à froid (i.e. " cold flow ") réduit, sans mise en oeuvre d'une réaction de post-polymérisation de type "jumping " à l'aide de composés halogènes soufrés ou non. Ce fluage ou écoulement à froid (i.e. " cold flow ") réduit traduit l'aptitude réduite des élastomères à s'écouler sous une charge Cette situation se rencontre par exemple lorsque des échantillons ou " balles " de ces élastomères sont empilés les uns sur les autres dans des caisses de stockage. Le fluage à froid calculé selon la méthode citée plus bas, est typiquement inférieur à 0,5 g et plus avantageusement inférieur à 0,3 g et égal ou supérieur à 0,01 g.

De manière particulièrement préférentielle, ledit élastomère diénique est choisi dans le groupe des élastomères diéniques fortement insaturés constitué par les polybutadiènes (BR), les polyisoprènes de synthèse (IR), les copolymères du butadiène et les copolymères de l'isoprène.

L'élastomère diénique obtenu par le procédé de polymérisation selon l'invention est avantageusement caractérisé par un taux élevé d'enchaînements cis-1,4, et il peut être par exemple constitué d'un polyisoprène (IR), d'un polybutadiène (BR), d'un copolymère de l'isoprène ou d'un copolymère du butadiène.

Le procédé selon l'invention permet d'obtenir des polybutadiènes présentant une viscosité inhérente, mesurée à 25°C et à une concentration de 0,1 g/dl dans le toluène, qui est supérieure à 2 dl/g (cette viscosité inhérente étant mesurée selon la norme ASTM D 1646).

Le procédé selon l'invention permet également d'obtenir des polybutadiènes présentant des taux d'enchaînements cis-1,4 élevés, en particulier les polybutadiènes peuvent présenter des taux d'enchaînements cis-1,4, mesurés par la technique de dosage par proche infrarouge (NIR), qui peuvent être supérieurs à 90%, avantageusement supérieurs à 94%, plus avantageusement compris entre 96,0 % et 99,0 %.

Les polybutadiènes obtenus présentent avantageusement un indice de polydispersité inférieur à 2,5 (mesuré par la technique de chromatographie d'exclusion par la taille SEC), plus avantageusement inférieur à 2,3.

Les polybutadiènes obtenus présentent avantageusement une viscosité Mooney ML(1+4) à 100° C, 2 tours/-minute avantageusement supérieure ou égale à 35, plus avantageusement supérieure ou égale à 40.

Les polybutadiènes obtenus présentent avantageusement un fluage à froid réduit, de préférence inférieur à 0,3 tel que caractérisé par la mesure de Cold Flow (1+6, 100°C).

Ces polybutadiènes sont particulièrement bien adaptés pour être utilisés dans des bandes de roulement d'enveloppe de pneumatique.

Le procédé selon l'invention permet également d'obtenir des polyisoprènes présentant des taux d'enchaînements cis-1,4 élevés, en particulier les polyisoprènes peuvent présenter des taux d'enchaînements cis-1,4, mesurés par la technique de dosage par proche infrarouge (NIR), qui peuvent être supérieurs à 90%, avantageusement supérieurs à 94 %.

Les polyisoprènes obtenus présentent avantageusement un indice de polydispersité inférieur à 2,3.

Les polyisoprènes obtenus présentent avantageusement une viscosité Mooney ML (1+4) à 100°C pouvant être comprise dans une fourchette de valeurs relativement large, de l'ordre de 40 à 100.

Ces polyisoprènes sont particulièrement bien adaptés pour être utilisés dans des bandes de roulement d'enveloppe de pneumatique.

Les protocoles de mesure de ces différentes propriétés sont définis en introduction des exemples.

## EXEMPLES

### Mesures utilisées

### Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g.L$^{-1}$. Puis la solution est filtrée sur filtre de porosité 0,45$\mu$m avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 mL.min$^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des polybutadiènes de microstructure suivante : 99% massique de motifs type 1-4 cis.

### Viscosité Mooney

Pour les polymères et les compositions de caoutchouc, les viscosités Mooney ML(1+4) 100°C sont mesurées selon la norme ASTM D 1646 (décembre 2015).

Un consistomètre oscillant est utilisé tel que décrit dans la norme ASTM D 1646. La mesure de plasticité Mooney se fait selon le principe suivant : l'élastomère ou la composition à l'état cru (i.e. avant cuisson) est moulé(e) dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML(1+4) est exprimée en "unité Mooney" (UM, avec 1 UM = 0,83 N.m).

La différence entre la viscosité Mooney de la composition et la viscosité Mooney de l'élastomère permet de mesurer la processabilité ou mise en oeuvre à cru. Plus cette différence est faible, meilleure est la mise en oeuvre à cru.

### Calorimétrie différentielle

Les températures de transition vitreuse (Tg) des élastomères sont déterminées à l'aide d'un calorimètre différentiel ("differential scanning calorimeter") avec une vitesse de balayage de 20°C/min.

### Spectroscopie proche infrarouge (NIR)

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}$C. La microstructure sont alors calculés à partir du spectre NIR d'un film d'élastomère d'environ 730 $\mu$m d'épaisseur. L'acquisition du spectre est réalisée en mode transmission entre 4000 et 6200 cm$^{-1}$ avec une résolution de 2 cm$^{-1}$, à l'aide d'un spectromètre proche infrarouge à transformée de Fourier Bruker Tensor 37 équipé d'un détecteur InGaAs refroidi par effet Peltier.

### Viscosité inhérente

La viscosité inhérente des élastomères à 25 °C est déterminée à partir d'une solution d'élastomère à 0,1 g.dL$^{-1}$ dans le toluène, selon le principe suivant :
La viscosité inhérente est déterminée par la mesure du temps d'écoulement t de la solution de polymère et du temps d'écoulement to du toluène, dans un tube capillaire.

Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 g.dL$^{-1}$ sont mesurés.

La viscosité inhérente est obtenue par la relation suivante :

$$\eta_{inh} = \frac{1}{C} ln \left[ \frac{(t)}{(t_0)} \right]$$

avec :

C : concentration de la solution de polymère dans le toluène en g.dL$^{-1}$,

t : temps d'écoulement de la solution de polymère dans le toluène en seconde,

$t_0$ : temps d'écoulement du toluène en seconde,

$\eta_{inh}$ : viscosité inhérente exprimée en dL.g$^{-1}$.

### Cold-Flow ou fluage à froid

Il s'agit de mesurer la masse d'élastomère extrudée à travers une filière calibrée pendant un temps donné (6 heures) et dans des conditions fixées (T = 100 °C). La filière a un diamètre de 6,35 mm, une épaisseur de 0,5 mm et est située au fond et au centre d'une coupe cylindrique évidée de 52 mm de diamètre.

Dans ce dispositif sont placés 40 $\pm$ 4 g d'élastomère préalablement mis sous forme de pastille (2 cm d'épaisseur et 52 mm de diamètre). Sur la pastille d'élastomère est positionné un piston calibré de 1 kg ($\pm$ 5 g). L'ensemble est ensuite placé dans une étuve à 100 $\pm$ 0,5°C.

Les conditions n'étant pas stabilisées lors de la première heure dans l'étuve, le produit extrudé à t = 1 heure est découpé puis jeté.

La mesure est ensuite poursuivie pendant 6 heures $\pm$ 5 mn, durant lesquelles le produit est laissé dans l'étuve. À l'issue des 6 heures, l'échantillon de produit extrudé est découpé puis pesé. Le résultat de la mesure est la masse d'élastomère pesée, exprimée en g et est noté CF(1+6) 100°C. Plus ce résultat est faible, plus l'élastomère résiste au fluage à froid.

### Préparation du catalyseur de polymérisation

Le système catalytique a été préparé selon le procédé conforme à l'invention décrite dans la demande de brevet WO2007/045417et schématisé dans la figure 1 de cette demande de brevet.

Les mélangeurs dynamiques destinés aux étapes d'alkylation et d'halogénation /vieillissement sont de volumes respectifs 0,49l et 2,78l. Le débit de l'installation est de 2,34 I/h. On a préparé sur ce procédé le système catalytique qui présente la formule catalytique en rapport molaire Nd/butadiène/DIBAH/CDEA = 1/30/3/2,8 et la concentration de 0,044 mol/L en néodyme.

DIBAH = hydrure de diisobutylaluminium
CDEA = chlorure de diéthylaluminium

Plus précisément, on a préparé ce système catalytique en utilisant une solution de sel de phosphate de néodyme (NdP3) dans le MCH (méthylcyclohexane) maintenue à 30°C et en réalisant :

- dans un premier mélangeur dynamique, l'ajout du diène de préformation à cette solution,
- dans le mélangeur dynamique suivant, l'alkylation du mélange ainsi obtenu et maintenu à 30°C via du DIBAH pendant une durée de 15 min, la concentration utilisée en DIBAH est de 1 mol/L ; puis
- dans le mélangeur dynamique suivant l'halogénation et le vieillissement du produit de la réaction d'alkylation via du CDEA à 60°C et pendant une durée de 70 min. La concentration utilisée en CDEA est de 0,785 mol/L.

Ce catalyseur est le catalyseur utilisé dans tous les exemples qui suivent.

**Exemple 1 : synthèse de polybutadiène avec le catalyseur et une concentration massique initiale en monomère de 10,8% et comparaison des propriétés du polymère**

**Exemple comparatif 1COMPAR :**

La polymérisation du butadiène est réalisée à l'aide d'un procédé de polymérisation continu à 2 ou 3 réacteurs de même volume (14 L) disposés en série et munis chacun d'une double enveloppe de refroidissement dont la température est ajustable pour régler la température de polymérisation.
Un mélange de méthylcyclohexane (solvant de polymérisation), de butadiène dans la proportion de 10,8% par rapport à la quantité totale de butadiène et solvant, de catalyseur sont injectés dans le premier réacteur de polymérisation. La quantité de néodyme injectée est exprimée en $\mu$mol pour 100 g de monomère butadiène, ce qui est noté « $\mu$mcm ».
Le deuxième réacteur est alimenté exclusivement par le mélange sortant du premier réacteur. De même, le troisième réacteur, lorsqu'il est présent, est alimenté exclusivement par le mélange sortant du deuxième réacteur.
Le temps de séjour, calculé en supposant une masse volumique constante de 762 kg/m$^3$ dans chacun des réacteurs, est de 12,6 min. En présence de deux réacteurs, la température de polymérisation dans le premier réacteur est de 90°C, de 95°C dans le second réacteur. En présence de trois réacteurs, la température de polymérisation dans le premier réacteur est de 90°C, de 95°C dans le deuxième réacteur et de 98°C dans le dernier réacteur. Les caractéristiques du polybutadiène obtenu en sortie du dernier réacteur sont reportées dans le tableau 1.

**Exemple selon l'invention 11NV :**

La polymérisation du butadiène est réalisée à l'aide d'un procédé de polymérisation continu à 2 ou 3 réacteurs de même volume (14 L) disposés en série et munis chacun d'une double enveloppe de refroidissement dont la température est ajustable pour régler la température de polymérisation.
Le mélange de méthylcyclohexane (solvant de polymérisation) et de butadiène est à une proportion en butadiène de 10,8% par rapport à la quantité totale de butadiène et solvant.
Une première partie de ce mélange est injectée dans le premier réacteur de polymérisation avec le catalyseur et le cas échéant un complément de DIBAH.
L'autre partie du mélange de méthylcyclohexane et de butadiène est injectée dans le second réacteur de polymérisation.
Ainsi, le second réacteur est alimenté par cette autre partie du mélange de méthylcyclohexane et de butadiène et par le mélange sortant du premier réacteur.
Le rapport massique entre le flux (solvant + butadiène) injecté dans le premier réacteur et le flux (solvant + butadiène) injecté dans le second réacteur est de 74%/26%.
Le troisième réacteur, lorsqu'il est présent, est alimenté exclusivement par le mélange sortant du deuxième réacteur.
Le temps de séjour, calculé en supposant une masse volumique constante de 762 kg/m$^3$ dans le deuxième réacteur est de 12,6 min. En présence de deux réacteurs, la température de polymérisation dans le premier réacteur est de 90°C, de 95°C dans le second réacteur. En présence de trois réacteurs, la température de polymérisation dans le premier réacteur est de 90°C, de 95°C dans le deuxième réacteur et de 98°C dans le dernier réacteur. Les caractéristiques du polybutadiène obtenu en sortie du dernier réacteur sont reportées dans le tableau 1.

Tableau 1

| | POLYMERISATION | | | CARACTERISTIQUES DES POLYBUTADIENE OBTENUS | | | | | |
|---|---|---|---|---|---|---|---|---|---|
| | Nd (μmcm) | DIBAH en complément (μmcm) | Nombre de réacteurs | ML (1+4) | Mn | Ip | Cis (%) | Viscosité inhérente (dL/g) | Cold-Flow (g) |
| 1COMPAR | 400 | 0 | 3 | 46 | 206343 | 1,91 | 95,7% | 2,59 | 0,45 |
| | | 0 | 2 | 39 | 207568 | 1,87 | 96,0% | 2,47 | 0,71 |
| 1INV | | 92 | 3 | 42 | 203049 | 1,91 | 95,2% | 2,51 | 0,43 |
| | | 0 | 2 | 40 | 178760 | 1,99 | 95,9% | 2,51 | 0,65 |

L'analyse du tableau 1 fait ressortir que, pour un même nombre de réacteurs, le procédé classique (1COMPAR) et le procédé avec réinjection (1INV) permettent la synthèse de polybutadiènes, qui, pour un Mooney équivalent, présentent des propriétés de structure (Ip, % de cis) équivalentes et des propriétés d'écoulement (fluage à froid) équivalentes.

**Exemple 2** : **synthèse de polybutadiène avec le catalyseur et une concentration massique initiale en monomère de 14,9% et comparaison des propriétés du polymère**

**Exemple comparatif 2COMPAR :**

La polymérisation du butadiène est réalisée à l'aide d'un procédé de polymérisation continu à 2 ou 3 réacteurs de même volume (14 L) disposés en série et munis chacun d'une double enveloppe de refroidissement dont la température est ajustable pour régler la température de polymérisation.
Un mélange de méthylcyclohexane (solvant de polymérisation), de butadiène dans la proportion de 14,9% par rapport à la quantité totale de butadiène et solvant, de catalyseur et un complément de DIBAH sont injectés dans le premier réacteur de polymérisation. La quantité de néodyme injectée est exprimée en μmol pour 100 g de monomère butadiène, ce qui est noté « μmcm ».
Le deuxième réacteur est alimenté exclusivement par le mélange sortant du premier réacteur. De même, le troisième réacteur, lorsqu'il est présent, est alimenté exclusivement par le mélange sortant du deuxième réacteur.
Le temps de séjour, calculé en supposant une masse volumique constante de 762 kg/m$^3$ dans chacun des réacteurs, est de 20,5 min. En présence de deux réacteurs, la température de polymérisation dans le premier réacteur est de 90°C, de 95°C dans le second réacteur. En présence de trois réacteurs, la température de polymérisation dans le premier réacteur est de 90°C, de 95°C dans le deuxième réacteur et de 98°C dans le dernier réacteur. La conversion est supérieure à 98%. Les caractéristiques du polybutadiène obtenu en sortie du dernier réacteur sont reportées dans le tableau 2.

**Exemple selon l'invention 2INV :**

La polymérisation du butadiène est réalisée à l'aide d'un procédé de polymérisation continu à 2 ou 3 réacteurs de même volume (14 L) disposés en série et munis chacun d'une double enveloppe de refroidissement dont la température est ajustable pour régler la température de polymérisation.
Le mélange de méthylcyclohexane (solvant de polymérisation) et de butadiène est à une proportion en butadiène de 14,9% par rapport à la quantité totale de butadiène et solvant.
Une première partie de ce mélange est injectée dans le premier réacteur de polymérisation avec le catalyseur et le cas échéant un complément de DIBAH.
L'autre partie du mélange de méthylcyclohexane et de butadiène est injectée dans le second réacteur de polymérisation.
Ainsi, le second réacteur est alimenté par cette autre partie du mélange de méthylcyclohexane et de butadiène et par le mélange sortant du premier réacteur.
Le rapport massique entre le flux (solvant + butadiène) injecté dans le premier réacteur et le flux (solvant + butadiène) injecté dans le second réacteur est de 74%/26%.
Le troisième réacteur, lorsqu'il est présent, est alimenté exclusivement par le mélange sortant du deuxième réacteur.

Le temps de séjour, calculé en supposant une masse volumique constante de 762 kg/m3 dans le deuxième réacteur est de 20,5 min. En présence de deux réacteurs, la température de polymérisation dans le premier réacteur est de 90°C, de 95°C dans le second réacteur. En présence de trois réacteurs, la température de polymérisation dans le premier réacteur est de 90°C, de 95°C dans le deuxième réacteur et de 98°C dans le dernier réacteur. La conversion est supérieure à 98%.

Les caractéristiques du polybutadiène obtenu en sortie du dernier réacteur sont reportées dans le tableau 2.

Tableau 2

| | Nd (μMcm) | DIBAH en complément (μMcm) | Nombre de réacteurs | ML (1+4) | Mn | Ip | Cis (%) | Cold-Flow (g) |
|---|---|---|---|---|---|---|---|---|
| | **POLYMERISATION** | | | **CARACTERISTIQUES DES POLYBUTADIENSE OBTENUS** | | | | |
| 2COMPAR | 226 | 351 | 3 | 43 | 203568 | 1,87 | 95,4% | 0,31 |
| | 231 | 351 | 2 | 36 | 184395 | 1,96 | 95,7% | 0,63 |
| 2INV | 219 | 350 | 3 | 40 | 197328 | 1,94 | 95,3% | 0,33 |
| | 228 | 352 | 2 | 33 | 178100 | 2,02 | 95,8% | 0,64 |

L'analyse du tableau 2 fait ressortir que, pour un même nombre de réacteurs, le procédé classique (2COMPAR) et le procédé avec réinjection (2INV) permettent la synthèse de polybutadiènes, qui, pour un Mooney équivalent, présentent des propriétés de structure (Ip, % de cis) équivalentes et des propriétés d'écoulement (fluage à froid) équivalentes.

**Exemple 3 : Influence du procédé sur la concentration massique initiale en monomère admissible**

Exemple 3COMPAR : Synthèse de polybutadiène avec le catalyseur précité et comparaison des conditions de polymérisation

La polymérisation du butadiène est réalisée à l'aide d'un procédé de polymérisation continu à 2 réacteurs de même volume (14 L) disposés en série et munis chacun d'une double enveloppe de refroidissement dont la température est ajustable pour régler la température de polymérisation. La surface de la double enveloppe est de 0,32 m2.

Le deuxième réacteur est alimenté exclusivement par le mélange sortant du premier réacteur.

La concentration massique en monomère initiale est progressivement augmentée jusqu'à atteindre la limite basse de température de la double enveloppe (refroidissement maximal). Cette limite basse de température est fixée à 5°C. Celle-ci est atteinte au niveau de la double enveloppe du premier réacteur.

Les conditions du point de fonctionnement sont alors celles du tableau 3

Tableau 3

| | |
|---|---|
| Température initiale du mélange de solvant et monomère | 20°C |
| Température du réacteur n°1 | 90°C |
| Température du réacteur n°2 | 95°C |
| Temps de séjour dans le premier et le deuxième réacteur | 20,6 min |
| Teneur en catalyseur | 230 μmcm |
| Température de la double enveloppe du premier réacteur | 5°C |
| Température de la double enveloppe du deuxième réacteur | 83°C |
| Concentration maximale initiale en monomère | 21,4% |
| Besoin spécifique en solvant (kg/kg de polymère) | 3,7 |

La conversion est supérieure à 98%.

Exemple 3INV : Synthèse de polybutadiène avec le catalyseur précité et comparaison des conditions de polymérisation

La polymérisation du butadiène est réalisée à l'aide d'un procédé de polymérisation continu à 2 réacteurs de même volume (14 L) disposés en série et munis chacun d'une double enveloppe de refroidissement dont la température est ajustable pour régler la température de polymérisation. La surface de la double enveloppe est de 0,32 m$^2$.

Une partie du mélange initial de méthylcyclohexane et de butadiène est prélevée avant qu'il ne soit mélangé au catalyseur et au complément de DIBAH. Cette partie est injectée directement dans le second réacteur de polymérisation. Le rapport massique entre le flux (solvant + butadiène) injecté dans le premier réacteur et le flux (solvant+ butadiène) injecté dans le second réacteur est de 74%/26%, de sorte que le temps de séjour dans le deuxième réacteur est identique à celui dans le deuxième réacteur de l'exemple 3COMPAR.

Le second réacteur est alimenté par cette autre partie du mélange de méthylcyclohexane et de butadiène et par le mélange sortant du premier réacteur.

La concentration massique en monomère initiale est progressivement augmentée jusqu'à atteindre la limite basse de température de la double enveloppe (refroidissement maximal). Cette limite basse de température est fixée à 5°C. Celle-ci est atteinte au niveau de la double enveloppe du premier réacteur.

Les conditions du point de fonctionnement sont alors celles du tableau 4

Tableau 4

| | |
|---|---|
| Température initiale du mélange de solvant et monomère entrant dans le premier réacteur | 20°C |
| Température du réacteur n°1 | 90°C |
| Température du réacteur n°2 | 95°C |
| Temps de séjour dans le deuxième réacteur | 20,6 min |
| Teneur en catalyseur | 230 μmcm |
| Température de la double enveloppe du premier réacteur | 5°C |
| Température de la double enveloppe du deuxième réacteur | 50°C |
| Concentration maximale initiale en monomère | 24% |
| Besoin spécifique en solvant (kg/kg de polymère) | 3,2 |

La conversion est supérieure à 98%.

L'analyse des tableaux 3 et 4 fait ressortir que pour des mêmes conditions de polymérisation (teneur en catalyseur) le changement de procédé permet d'accroître la concentration des monomères dans le mélange initial. En effet, la température de 5°C au niveau de la double enveloppe du premier réacteur est atteinte pour une concentration massique en monomère de 21,4% dans le procédé comparatif alors qu'avec le procédé selon l'invention la concentration massique en monomère peut être augmentée jusqu'à 24%.

Le procédé est alors plus productif. Il permet de consommer moins de solvant pour une même quantité de polymère produite. La réduction relative de poids de solvant dans cet exemple est d'environ 14%.

**Revendications**

**1.** Procédé continu de préparation d'un élastomère diénique, comprenant une réaction de polymérisation d'un système catalytique avec au moins un monomère diène conjugué à polymériser en solution dans un solvant, le système catalytique est à base d'au moins :

- Un sel organique de terre rare ;
- Un agent d'alkylation ; et, le cas échéant
- Un donneur d'halogène et/ou un monomère diène conjugué de préformation

dans au moins deux réacteurs de polymérisation pleins en série, **caractérisé en ce qu'**une partie du monomère diène conjugué à polymériser est introduit dans un réacteur de polymérisation subséquent au premier réacteur de polymérisation et **en ce qu'**une partie du solvant est introduite avec le monomère diène conjugué à polymériser dans le réacteur de polymérisation subséquent.

**2.** Procédé continu selon l'une quelconque des revendications précédentes, **caractérisé en ce qu'**au moins 20% en poids, par rapport au poids total, du monomère diène conjugué à polymériser est introduit dans un réacteur de polymérisation subséquent.

**3.** Procédé continu selon l'une quelconque des revendications précédentes, **caractérisé en ce que** la partie du monomère diène conjugué à polymériser introduite dans un réacteur de polymérisation subséquent est à une température comprise entre -10°C et 35°C, avantageusement entre 0°C et 20°C.

**4.** Procédé continu selon l'une quelconque des revendications précédentes, **caractérisé en ce qu'**il comprend les étapes simultanées suivantes :

a) introduction dans un premier réacteur de polymérisation du solvant, de la totalité du système catalytique, d'une partie du monomère diène conjugué à polymériser ;
b) polymérisation dudit monomère diène dans ledit premier réacteur de polymérisation ;
c) introduction dans un deuxième réacteur de polymérisation de la solution issue de l'étape b) et de la partie restante du monomère diène conjugué à polymériser ;
d) polymérisation dudit monomère diène dans ledit deuxième réacteur de polymérisation ;
e) le cas échéant, introduction dans un troisième réacteur de polymérisation de la solution issue de l'étape d) ;
f) le cas échéant, polymérisation dudit monomère diène dans ledit troisième réacteur de polymérisation.

**5.** Procédé continu selon la revendication précédente, **caractérisé en ce que** la polymérisation à l'étape b) est conduite à une température supérieure ou égale à 50°C.

**6.** Procédé continu selon la revendication 4 ou 5, **caractérisé en ce que** la polymérisation à l'étape d) est conduite à une température supérieure ou égale à 50°C.

**7.** Procédé continu selon l'une quelconque des revendications 4 à 6, **caractérisé en ce que** la polymérisation à l'étape f) est conduite à une température supérieure ou égale à 50°C.

**8.** Procédé continu selon l'une quelconque des revendications précédentes, **caractérisé en ce que** le monomère diène conjugué à polymériser et le solvant sont introduits, dans le premier et/ou le réacteur subséquent de polymérisation, à une température comprise entre -10°C et 35°C, avantageusement entre 0°C et 20°C.

**9.** Procédé continu selon l'une quelconque des revendications précédentes, **caractérisé en ce qu'**il comprend les étapes simultanées suivantes :

a1) séparation du flux d'entrée F comprenant le solvant et la totalité du monomère diène conjugué à polymériser en deux flux F1 et F2 ;
a2) introduction dans un premier réacteur de polymérisation du flux F1, du système catalytique ;
b) polymérisation en continu dudit monomère diène dans ledit premier réacteur de polymérisation ;
c) injection dans un deuxième réacteur de la solution issue de l'étape b) et du flux F2 ;
d) polymérisation en continu dudit monomère diène dans ledit deuxième réacteur de polymérisation ;
e) le cas échéant, injection dans un troisième réacteur de la solution issue de l'étape d) ;
f) le cas échéant, polymérisation en continu dudit monomère diène dans ledit troisième réacteur de polymérisation.

**10.** Procédé continu selon la revendication précédente, **caractérisé en ce qu'**au moins le flux F2 est à une température comprise entre -10°C et 35°C, avantageusement entre 0°C et 20°C.

**11.** Procédé continu selon l'une quelconque des revendications précédentes, **caractérisé en ce que** la concentration massique en monomère diène conjugué à polymériser est supérieure à 20%, par rapport au poids total de monomère diène conjugué à polymériser + solvant.

**12.** Procédé continu selon l'une quelconque des revendications précédentes, **caractérisé en ce que** le monomère diène à polymériser est choisi parmi le butadiène, l'isoprène ou leur mélange, avantageusement le monomère diène à polymériser est le butadiène.

**Patentansprüche**

1. Kontinuierliches Verfahren zur Herstellung eines Dien-Elastomers, umfassend eine Polymerisationsreaktion eines katalytischen Systems mit mindestens einem zu polymerisierenden konjugierten Dienmonomer in Lösung in einem Lösungsmittel, wobei das katalytische System auf mindestens Folgendem basiert:

   - einem organischen Seltenerdmetallsalz;
   - einem Alkylierungsmittel und gegebenenfalls
   - einem Halogendonor und/oder einem konjugierten Dienmonomer für die Vorbildung,

   in mindestens zwei festen Polymerisationsreaktoren in Reihe, **dadurch gekennzeichnet, dass** ein Teil des zu polymerisierenden konjugierten Dienmonomers in einen auf den ersten Polymerisationsreaktor nachfolgenden Polymerisationsreaktor eingetragen wird und dass ein Teil des Lösungsmittels zusammen mit dem zu polymerisierenden konjugierten Dienmonomer in den nachfolgenden Polymerisationsreaktor eingetragen wird.

2. Kontinuierliches Verfahren nach einem der vorhergehenden Ansprüche, **dadurch gekennzeichnet, dass** mindestens 20 Gew.-%, bezogen auf das Gesamtgewicht, des zu polymerisierenden konjugierten Dienmonomers in einen nachfolgenden Polymerisationsreaktor eingetragen werden.

3. Kontinuierliches Verfahren nach einem der vorhergehenden Ansprüche, **dadurch gekennzeichnet, dass** der in einen nachfolgenden Polymerisationsreaktor eingetragene Teil des zu polymerisierenden konjugierten Dienmonomers bei einer Temperatur zwischen -10 °C und 35 °C, vorteilhafterweise zwischen 0 °C und 20 °C, vorliegt.

4. Kontinuierliches Verfahren nach einem der vorhergehenden Ansprüche, **dadurch gekennzeichnet, dass** es die folgenden gleichzeitigen Schritte umfasst:

   a) Eintragen des Lösungsmittels, des gesamten katalytischen Systems und eines Teils des zu polymerisierenden konjugierten Dienmonomers in einen ersten Polymerisationsreaktor;
   b) Polymerisieren des Dienmonomers in dem ersten Polymerisationsreaktor;
   c) Eintragen der Lösung aus Schritt b) und des verbleibenden Teils des zu polymerisierenden konjugierten Dienmonomers in einen zweiten Polymerisationsreaktor;
   d) Polymerisieren des Dienmonomers in dem zweiten Polymerisationsreaktor;
   e) gegebenenfalls Eintragen der Lösung aus Schritt d) in einen dritten Polymerisationsreaktor;
   f) gegebenenfalls Polymerisieren des Dienmonomers in dem dritten Polymerisationsreaktor.

5. Kontinuierliches Verfahren nach dem vorhergehenden Anspruch, **dadurch gekennzeichnet, dass** die Polymerisation in Schritt b) bei einer Temperatur größer oder gleich 50 °C durchgeführt wird.

6. Kontinuierliches Verfahren nach Anspruch 4 oder 5, **dadurch gekennzeichnet, dass** die Polymerisation in Schritt d) bei einer Temperatur größer oder gleich 50 °C durchgeführt wird.

7. Kontinuierliches Verfahren nach einem der Ansprüche 4 bis 6, **dadurch gekennzeichnet, dass** die Polymerisation in Schritt f) bei einer Temperatur größer oder gleich 50 °C durchgeführt wird.

8. Kontinuierliches Verfahren nach einem der vorhergehenden Ansprüche, **dadurch gekennzeichnet, dass** das zu polymerisierende konjugierte Dienmonomer und das Lösungsmittel bei einer Temperatur zwischen -10 °C und 35 °C, vorteilhafterweise zwischen 0 °C und 20 °C, in den ersten und/oder nachfolgenden Polymerisationsreaktor eingetragen werden.

9. Kontinuierliches Verfahren nach einem der vorhergehenden Ansprüche, **dadurch gekennzeichnet, dass** es die folgenden gleichzeitigen Schritte umfasst:

   a1) Trennen des Eingangsstroms F, der das Lösungsmittel und das gesamte zu polymerisierende konjugierte DienMonomer umfasst, in zwei Ströme F1 und F2;
   a2) Eintragen des katalytischen Systems in einen ersten Polymerisationsreaktor von Strom F1;
   b) kontinuierliches Polymerisieren des Dienmonomers in dem ersten Polymerisationsreaktor;
   c) Einleiten der Lösung aus Schritt b) und des Stroms F2 in einen zweiten Reaktor;
   d) kontinuierliches Polymerisieren des Dienmonomers in dem zweiten Polymerisationsreaktor;

e) gegebenenfalls Einleiten der Lösung aus Schritt d) in einen dritten Reaktor;
f) gegebenenfalls kontinuierliches Polymerisieren des Dienmonomers in dem dritten Polymerisationsreaktor.

10. Kontinuierliches Verfahren nach dem vorhergehenden Anspruch, **dadurch gekennzeichnet, dass** zumindest der Strom F2 bei einer Temperatur zwischen -10 °C und 35 °C, vorteilhafterweise zwischen 0 °C und 20 °C, vorliegt.

11. Kontinuierliches Verfahren nach einem der vorhergehenden Ansprüche, **dadurch gekennzeichnet, dass** die Massenkonzentration des zu polymerisierenden konjugierten Dienmonomers größer als 20 %, bezogen auf das Gesamtgewicht von zu polymerisierendem konjugiertem Dienmonomer + Lösungsmittel, ist.

12. Kontinuierliches Verfahren nach einem der vorhergehenden Ansprüche, **dadurch gekennzeichnet, dass** das zu polymerisierende Dienmonomer aus Butadien, Isopren oder einer Mischung davon ausgewählt wird und vorteilhafterweise das zu polymerisierende Dienmonomer Butadien ist.

## Claims

1. Continuous method for producing a diene elastomer, comprising a polymerization reaction of a catalytic system with at least one conjugated diene monomer to be polymerized in solution in a solvent, the catalytic system is based on at least:

   - a rare earth organic salt;
   - an alkylating agent; and, if applicable
   - a halogen donor and/or a preforming conjugated diene monomer in at least two full polymerization reactors in series, **characterized in that** a portion of the conjugated diene monomer to be polymerized is introduced into a polymerization reactor subsequent to the first polymerization reactor, and **in that** a portion of the solvent is introduced with the conjugated diene monomer to be polymerized into the subsequent polymerization reactor.

2. Continuous method according to any one of the preceding claims, **characterized in that** at least 20 wt%, relative to the total weight, of the conjugated diene monomer to be polymerized is introduced into a subsequent polymerization reactor.

3. Continuous method according to any one of the preceding claims, **characterized in that** the portion of the conjugated diene monomer to be polymerized introduced into a subsequent polymerization reactor is at a temperature between -10°C and 35°C, advantageously between 0°C and 20°C.

4. Continuous method according to any one of the preceding claims, **characterized in that** it comprises the following simultaneous steps:

   a) introducing, into a first polymerization reactor, the solvent, all of the catalytic system, a portion of the conjugated diene monomer to be polymerized;
   b) polymerizing said diene monomer in said first polymerization reactor;
   c) introducing, into a second polymerization reactor, the solution resulting from step b) and the remainder of the conjugated diene monomer to be polymerized;
   d) polymerizing said diene monomer in said second polymerization reactor;
   e) if applicable, introducing the solution resulting from step d) into a third polymerization reactor;
   f) if applicable, polymerizing said diene monomer in said third polymerization reactor.

5. Continuous method according to the preceding claim, **characterized in that** the polymerization in step b) is carried out at a temperature greater than or equal to 50°C.

6. Continuous method according to Claim 4 or 5, **characterized in that** the polymerization in step d) is carried out at a temperature greater than or equal to 50°C.

7. Continuous method according to any one of Claims 4 to 6, **characterized in that** the polymerization in step f) is carried out at a temperature greater than or equal to 50°C.

8. Continuous method according to any one of the preceding claims, **characterized in that** the conjugated diene monomer to be polymerized and the solvent are introduced, into the first and/or subsequent polymerization reactor, at a temperature between -10°C and 35°C, advantageously between 0°C and 20°C.

9. Continuous method according to any one of the preceding claims, **characterized in that** it comprises the following simultaneous steps:

   a1) separating the incoming stream F comprising the solvent and all of the conjugated diene monomer to be polymerized into two streams F1 and F2;
   a2) introducing the catalytic system into a first polymerization reactor of stream F1;
   b) polymerizing said diene monomer continuously in said first polymerization reactor;
   c) injecting the solution resulting from step b) and stream F2 into a second reactor;
   d) polymerizing said diene monomer continuously in said second polymerization reactor;
   e) if applicable, injecting the solution resulting from step d) into a third reactor;
   f) if applicable, polymerizing said diene monomer continuously in said third polymerization reactor.

10. Continuous method according to the preceding claim, **characterized in that** at least stream F2 is at a temperature between -10°C and 35°C, advantageously between 0°C and 20°C.

11. Continuous method according to any one of the preceding claims, **characterized in that** the concentration by weight of conjugated diene monomer to be polymerized is above 20%, relative to the total weight of conjugated diene monomer to be polymerized + solvent.

12. Continuous method according to any one of the preceding claims, **characterized in that** the diene monomer to be polymerized is selected from butadiene, isoprene or a mixture thereof, advantageously the diene monomer to be polymerized is butadiene.

Fig. 1

Fig. 2

Fig. 3

## RÉFÉRENCES CITÉES DANS LA DESCRIPTION

**Documents brevets cités dans la description**

- WO 0238636 A
- WO 03097708 A
- EP 1845118 A
- US 6372863 B1
- CN 103360525 A
- RU 2028308 C1
- RU 2263121 C2
- WO 2010139449 A
- WO 2007045417 A
- WO 2006133757 A
- WO 10069511 A
- WO 10069805 A

**Littérature non-brevet citée dans la description**

- **VILMIN, F** ; **DUSSAP, C.** ; **COSTE, N**. *Applied Spectroscopy*, 2006, vol. 60, 619-29